# EUROPEAN PATENT APPLICATION

(11) **EP 4 462 564 A1**
(43) Date of publication of application: **13.11.2024**
(21) Application number: 23880152.6
(22) Date of filing: 17.10.2023
(51) Int. Cl.: H01M 50/242, H01M 50/238, H01M 50/211, H01M 50/224

(54) **PANEL ASSEMBLY, BATTERY CELL BLOCK COMPRISING SAME, BATTERY MODULE AND BATTERY PACK**

(30) Priority: 18.10.2022 KR 20220134383
(71) Applicant: LG Energy Solution, Ltd., Seoul 07335 (KR)
(72) Inventor: HUR, Nam Hoon, Daejeon 34122 (KR); LEE, Hyoung Suk, Daejeon 34122 (KR); SHIN, Ju Hwan, Daejeon 34122 (KR)
(74) Representative: Plasseraud IP
(86) International application number: PCT/KR2023/015979
(87) International publication number: WO 2024/085575

(57) **Abstract**

The present technology provides a panel assembly installed on a battery cell stack on which a plurality of battery cells are stacked to absorb swelling pressure of the plurality of battery cells, the panel assembly including: a first panel including at least one first protrusion protruding in a thickness direction of the plurality of battery cells, and coupled to a lower end of the at least one first protrusion to surround the at least one first protrusion, and a second panel including at least one first through-hole and disposed to face the first panel, in which opposite inner sides of the first and second panels are combined with each other while the at least one first protrusion is inserted into the at least one first through-hole to cause a front end of the at least one first protrusion to protrude through the at least one first through-hole, and the at least one first protrusion is elastically displaced to absorb swelling pressure of the plurality of battery cells when the front end of the at least one first protrusion is pressed by the swelling pressure of the plurality of battery cells. The present technology also provides a battery cell block including the panel assembly, and a battery module including the battery cell block. The present technology also provides a battery pack including the battery module.

## Description

### [Technical Field]

The present invention relates to a panel assembly for absorbing swelling pressure of a battery cell.

In addition, the present invention relates to a battery cell block including the panel assembly, a battery module, and a battery pack.

This application claims the benefit of priority based on Korean Patent Application No. 10-2022-0134383, filed on October 18, 2022, and the entire content of the Korean patent application is incorporated herein by reference.

### [Background Art]

Recently, chargeable and dischargeable secondary batteries have been widely used as energy sources of wireless mobile devices. Two or three battery cells are arranged in secondary batteries for use in small-sized devices, but battery modules in which a plurality of battery cells are electrically connected are used in secondary batteries for use in medium-or large-sized devices such as vehicles. In such a battery module, a plurality of battery cells are connected in series or in parallel to form a battery cell stack, thereby increasing a capacity and an output.

The battery cell includes an electrode assembly and an electrolyte, and the electrode assembly is formed by stacking a positive electrode, a negative electrode, and a separator. The battery cell can be repeatedly charged and discharged through an electrochemical reaction between the above components. However, an internal temperature of the battery cell may abnormally increase due to excessive charging and discharging of the battery cell or a defect of the battery cell. That is, a side reaction may occur between an active material of the electrode assembly and the electrolyte due to such a defect and thus the internal temperature of the battery cell may abnormally increase. In this case, the electrolyte may vaporize due to the abnormal internal temperature of the battery cell and thus a gas may be generated therefrom. When the amount of a gas vaporized from the electrolyte is excessive, a swelling phenomenon, i.e., the swelling of the battery cell, occurs. When the battery cell swells, battery cells adjacent to the battery cell may be pressed and damaged due to the expansion of the volume of the battery cell. Otherwise, heat from the battery cell that swells and thus is heated to high temperature may be transmitted to other adjacent battery cells. When this problem is ignored, a fire, an explosion, or the like may occur in the battery cell or a battery pack. Therefore, there is a need for a component or device capable of absorbing the swelling of the battery cell.

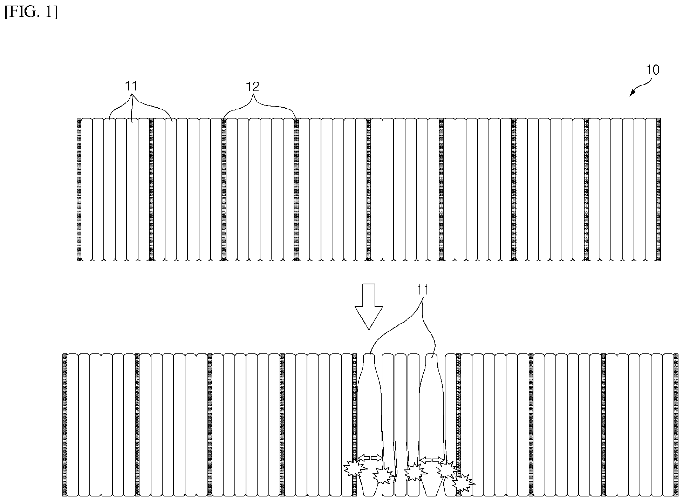

FIG. 1 is a schematic diagram illustrating swelling occurring in a battery cell stack of the related art.

Referring to FIG. 1, a battery cell stack 10 is formed by stacking a plurality of battery cells 11. In addition, compression pads 12 may be arranged at regular intervals between the battery cells 11. The lower diagram of FIG. 1 is a schematic view illustrating swelling occurring in the battery cells 11 of the battery cell stack 10. As shown in the lower diagram of FIG. 1, when thicknesses of the battery cells 11 change due to the swelling, the compression pads 12 may absorb or buffer the deformation of the battery cells 11. Specifically, a change of the thicknesses of the battery cells 11 results in elastic deformation of the compression pads 12. Therefore, the deformation of the battery cells 11 is absorbed. The compression pads 12 may be formed of a polyurethane-based material.

However, the compression pads 12 do not sufficiently support the battery cells 11 due to low rigidity thereof. In addition, the battery cells 11 may not endure the swelling pressure and thus be damaged when the battery cells 11 swell repeatedly.

Therefore, there is a need for the development of a component or device capable of sufficiently absorbing the swelling of battery cells while firmly supporting the battery cells.

### [Related Art Literature]

### [Patent Document]

U.S. Patent Publication No. 2022-0294070

### [Disclosure]

### [Technical Problem]

To address the above problem, the present invention is directed to providing a panel assembly capable of effectively absorbing a change in thickness of and swelling pressure of battery cells due to the swelling of the battery cells.

The present invention is also directed to providing a battery cell block including the panel assembly, a battery module, and a battery pack.

### [Technical Solution]

An aspect of the present invention may include a panel assembly installed on a battery cell stack on which a plurality of battery cells are stacked to absorb swelling pressure of the plurality of battery cells, the panel assembly including a first panel including at least one first protrusion protruding in a thickness direction of the plurality of battery cells, and coupled to a lower end of the at least one first protrusion to surround the at least one first protrusion, and a second panel including at least one first through-hole, the second panel being disposed to face the first panel, wherein opposite inner sides of the first and second panels are combined with each other while the at least one first protrusion is inserted into the at least one first through-hole to cause a front end of the at least one first protrusion to protrude through the at least one first through-hole, and wherein the at least one first protrusion is elastically displaced in a direction opposite to a direction of protrusion to absorb swelling pressure of the plurality of battery cells when the front end of the at least one first protrusion is pressed by the swelling pressure of the plurality of battery cells.

An aspect of the present invention may include that a shape of the first panel and a shape of the second panel correspond to shapes of sides of the plurality of battery cells.

An aspect of the present invention may include that the at least one first protrusion may be provided on the first panel in a size corresponding to a size of an electrode assembly accommodated in each of the plurality of battery cells, and wherein the at least one first through-hole may be provided in the second panel to correspond to the at least one first protrusion.

An aspect of the present invention may include that there may be a gap between an outer circumferential surface of the at least one first protrusion inserted into the at least one first through-hole and an inner circumferential surface of the at least one first through-hole.

An aspect of the present invention may include that an inner side of the at least one first protrusion may include a concave shape corresponding to a protruding shape of the at least one first protrusion when viewed from a side of the panel assembly with the direction opposite to the direction of protrusion.

An aspect of the present invention may include that the inner side of the first panel may be provided with a plurality of first coupling spots spaced a predetermined distance from the at least one first protrusion, wherein the inner side of the second panel may be provided with a plurality of second coupling spots provided to be spaced a predetermined distance from the at least one first through-hole and to correspond to positions of the plurality of first coupling spots, and wherein the opposite inner sides of the first panel and the second panel may be coupled with each other by coupling the first and second coupling spots corresponding to each other.

An aspect of the present invention may include that the plurality of first coupling spots may be provided on the inner side of the first panel along outer sides of corners of the at least one first protrusion or edges of the at least one first protrusion, and wherein the plurality of second coupling spots may be provided on the inner side of the second panel along outer sides of corners of the at least one first through-hole or edges of the at least one first through-hole.

An aspect of the present invention may include that the plurality of first coupling spots may be disposed apart from each other, and wherein the plurality of second coupling spots may be disposed apart from each other.

An aspect of the present invention may include that the plurality of first coupling spots and the plurality of second coupling spots are welding points configured to be spot-welded.

An aspect of the present invention may include that a plurality of first protrusions may be spaced a predetermined distance from each other in a longitudinal direction and/or a width direction of the first panel, and wherein a plurality of first through-holes may be spaced a predetermined distance from each other in a longitudinal direction and/or a width direction of the second panel to correspond to the plurality of first protrusions.

An aspect of the present invention may include that the first panel may be further include at least one second through-hole spaced apart from the at least one first protrusion, wherein the second panel may further include at least one second protrusion which protrudes in the thickness direction of the plurality of battery cells, has a lower end coupled to the second panel to be surrounded by the second panel, and is spaced apart from the at least one first through-hole, and wherein the at least one first protrusion and the at least one second protrusion may be elastically displaced in the direction opposite to the direction of protrusion to absorb the swelling pressure of the plurality of battery cells, when the front end of the at least one first protrusion and a front end of the at least one second protrusion are pressed by the swelling pressure while the front end of the at least one first protrusion and the front end of the at least one second protrusion protrude through the at least one first through-hole and the at least one second through-hole, respectively.

An aspect of the present invention may include that a plurality of first protrusions and a plurality of second through-holes may be provided in a longitudinal direction and/or a width direction of the first panel, and wherein a plurality of first through-holes and a plurality of second protrusions may be provided in a longitudinal direction and/or a width direction of the second panel to respectively correspond to the plurality of first protrusions and the plurality of second through-holes.

An aspect of the present invention may include that the plurality of first protrusions and the plurality of second through-holes may be irregularly provided in the longitudinal direction or the width direction of the first panel, and wherein the plurality of first through-holes and the plurality of second protrusions may be irregularly provided in the longitudinal direction and/or the width direction of the second panel to respectively correspond to the plurality of first protrusions and the plurality of second through-holes.

An aspect of the present invention may include that the plurality of first protrusions and the plurality of second through-holes may be regularly provided in the longitudinal direction and/or the width direction of the first panel, and wherein the plurality of first through-holes and the plurality of second protrusions may be regularly provided in the longitudinal direction or the width direction of the second panel to respectively correspond to the plurality of first protrusions and the plurality of second through-holes.

An aspect of the present invention may include that the first panel and the second panel may comprise metal panels.

An aspect of the present invention may include that a battery cell block includes a battery cell stack in which a plurality of battery cells are stacked, and the panel assembly, wherein the panel assembly is installed between the plurality of battery cells or at at least one side of the battery cell stack.

An aspect of the present invention may include that a battery module includes the battery cell block.

An aspect of the present invention may include that a battery pack includes the battery module.

### [Advantageous Effects]

According to the present invention, an expansion in thickness or swelling pressure caused by the swelling of battery cells can be effectively absorbed.

### [Brief Description of the Drawings]

FIG. 1 is a schematic diagram illustrating swelling occurring in battery cell stack of the related art.
FIG. 2 is a schematic view of a first panel and a second panel according to a first embodiment of the present invention.
FIG. 3 is a schematic view illustrating a state in which the first panel and the second panel according to the first embodiment of the present invention are combined with each other.
FIG. 4 is a cross-sectional side view of a panel assembly according to the first embodiment of the present invention.
FIG. 5 is a schematic view illustrating a state in which the panel assembly according to the first embodiment of the present invention is elastically displaced due to the swelling of battery cells.
FIG. 6 is a cross-sectional side view of the panel assembly according to the first embodiment of the present invention, in which the panel assembly is elastically displaced due to the swelling of the battery cells.
FIG. 7 is a schematic view illustrating the positions of coupling spots on the panel assembly according to the first embodiment of the present invention.
FIG. 8 is a schematic view of a first panel and a second panel according to a modified example of the first embodiment of the present invention.
FIG. 9 is a schematic view illustrating a state in which a panel assembly according to the modified example of the first embodiment of the present invention is elastically displaced due to the swelling of battery cells.
FIG. 10 is a schematic view of a first panel and a second panel according to a second embodiment of the present invention.
FIG. 11 is an enlarged view of one end of a panel assembly according to the second embodiment of the present invention.
FIG. 12 is a cross-sectional side view of the panel assembly of the second embodiment of the present invention, in which the panel assembly is elastically displaced due to the swelling of battery cells.
FIG. 13 is a schematic view of a first panel and a second panel according to a modified example of the second embodiment of the present invention.
FIG. 14 is a front view of battery cell blocks in which panel assemblies are installed on battery cell stacks of the present invention.
FIG. 15 is a schematic view illustrating a state in which the panel assembly according to the second embodiment of the present invention absorbs the swelling of battery cells in a battery cell stack.
FIG. 16 is an exploded perspective view of a battery module including a battery cell block in which the panel assembly according to the second embodiment of the present invention is installed.
FIG. 17 is a schematic view illustrating an example in which a battery module, including a battery cell block in which the panel assembly according to the second embodiment of the present invention is installed, is installed in a battery pack.

### [Best Mode]

A panel assembly of the present invention is installed on a battery cell stack, in which a plurality of battery cells are stacked, to absorb swelling pressure of the battery cells. The panel assembly includes a first panel including at least one first protrusion protruding in a thickness direction of the plurality of battery cells, and coupled to a lower end of the at least one first protrusion to surround the at least one first protrusion, and a second panel including at least one first through-hole and disposed to face the first panel, in which opposite inner sides of the first and second panels are combined with each other while the at least one first protrusion is inserted into the at least one first through-hole to cause a front end of the at least one first protrusion to protrude through the at least one first through-hole, and the at least one first protrusion is elastically displaced in a direction opposite to a direction of protrusion to absorb swelling pressure of the plurality of battery cells when the front end of the at least one first protrusion is pressed by the swelling pressure of the plurality of battery cells.

Another aspect of the present invention provides a battery cell block including a battery cell stack in which a plurality of battery cells are stacked, and the panel assembly installed between the plurality of battery cells and/or at least one side of the battery cell stack.

Another aspect of the present invention provides a battery module including the battery cell block.

Another aspect of the present invention provides a battery pack including the battery module.

### [Embodiments of the Present Invention]

Hereinafter, the present invention will be described in detail. Before describing the present invention, the terms or expressions used in the present specification and claims should not be construed as being limited to as generally understood or as defined in commonly used dictionaries, and should be understood according to meanings and concepts matching corresponding to the present invention on the basis of the principle that the inventor(s) of the application can appropriately define the terms or expressions to optimally explain the present invention.

It should be understood that the terms "comprise" and/or "comprising", when used herein, specify the presence of stated features, integers, steps, operations, elements, components, or a combination thereof, but do not preclude the presence or addition of one or more features, integers, steps, operations, elements, components, or a combination thereof. It should be understood that when a component such as a layer, a film, a region, a plate or the like is referred to as being "on" another component, the component is "right on" the other component or another component is interposed between these components. It should be understood that when a component such as a layer, a film, a region, a plate or the like is referred to as being "below" another component, the component is "right below" the other component or another component is interposed between these components. In addition, it should be understood that when a component is "on" another component, the component is on or below the other component.

A panel assembly according to the present invention is installed on a battery cell stack in which a plurality of battery cells are stacked. The battery cell stack may be formed by stacking the battery cells in a thickness direction. In this case, the panel assembly may also be stacked together in the thickness direction of the battery cells. That is, the panel assembly of the present invention may be installed in at least one of the positions at which the compression pads 12 of FIG. 1 are installed.

Hereinafter, a panel assembly of the present invention will be described in detail with reference to the drawings.

### (First Embodiment)

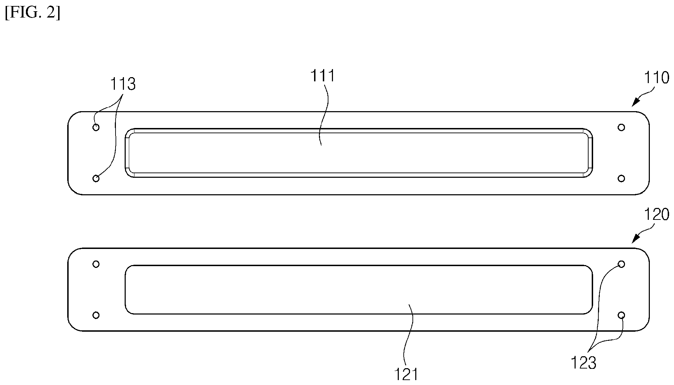

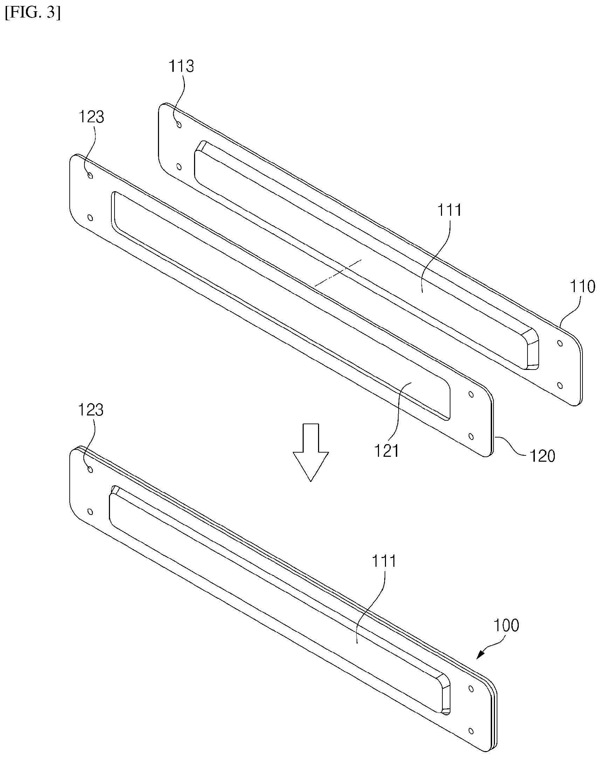

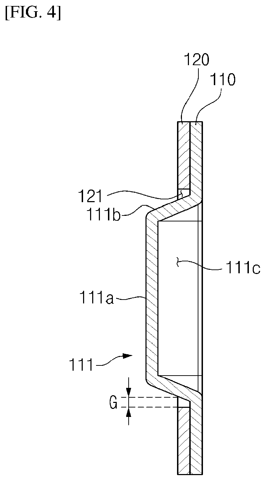

FIG. 2 is a schematic view of a first panel 110 and a second panel 120 according to a first embodiment of the present invention. FIG. 3 is a schematic view illustrating a state in which the first panel 110 and the second panel 120 according to the first embodiment of the present invention are combined with each other. FIG. 4 is a cross-sectional side view of a panel assembly 100 according to the first embodiment of the present invention.

Referring to FIGS. 2 and 3, the panel assembly 100 of the present invention includes a first panel 110 that includes at least one first projection 111 protruding in a thickness direction of battery cells 11 and connected to a lower end of the first projection 111 while surrounding the first projection 111, and a second panel 120 provided with at least one first through-hole 121 and disposed to face the first panel 110.

A panel assembly of the present invention is installed on a battery cell stack to absorb swelling pressure of battery cells included in the battery cell stack. To this end, the panel assembly includes a displacement mechanism capable of being elastically displaced in response to the swelling of the battery cells. The battery cell 11 (e.g., a pouch type battery cell) may have a rectangular shape that is horizontally long. Swelling pressure is concentrated on wider sides, i.e., both sides, of the battery cell 11 that are perpendicular to the thickness direction of the battery cell 11. Therefore, the panel assembly 100 is installed on a wider side of the battery cell in the battery cell stack.

The panel assembly 100 of the present invention includes two panels, i.e., the first panel 110 and the second panel 120. The first panel 110 and the second panel 120 may each have a shape corresponding to a shape of a side (a shape of the wider side) of the battery cell 11. Accordingly, swelling pressure transferred from the wider side of the battery cell 11 can be effectively dispersed or absorbed.

Each of the first panel 110 and the second panel 120 may be a plastic or metal panel formed of an elastically deformable material. The plastic panel is advantageous in that it is light in weight and is easy to be molded. However, in the case of the plastic panel, there is a limit in the number of repetitions of elastic deformation due to characteristics of the material thereof, and durability is low. In particular, the plastic panel may melt when thermal runaway occurs in a battery module or battery pack.

On the other hand, the metal panel is advantageous in terms of durability and rigidity. The compression pad 12 of the related art is likely to be damaged due to repeated swelling pressure, whereas the metal panel is not easily damaged and may maintain the shape thereof even when swelling pressure is repeatedly applied thereto. In addition, the metal panel is capable of stably absorbing swelling pressure due to excellent elastic displacement performance. In particular, even when a fire occurs, unlike the compression pad 12 of the related art, the metal panel does not melt and thus is capable of supporting battery cells and functioning as a flame blocking member. Accordingly, the panels 110 and 120 or the panel assembly 100 may delay or block the spread of flames to adjacent cells.

The first panel 110 and the second panel 120 may be formed of a metal by pressmolding a panel material. When the first panel 110 and the second panel 120 are formed by press molding as described above, the first and second panels 110 and 120 may be formed in various shapes according to a press mold. A press molding method is a known conventional technique and thus a detailed description thereof is omitted here.

As a displacement mechanism, the panel assembly 100 of the present invention includes protrusions that may be elastically displaced, and spaces, i.e., through-holes, in which the protrusions may be displaced.

The protrusions and the through-holes are provided on each of the first panel 110 and the second panel 120. The first panel 110 and the second panel 120 are disposed to face each other, and opposite inner sides thereof are combined with each other. The present invention is characterized in that even though the first panel 110 and the second panel 120 are combined with each other, the protrusions are not regulated and may be elastically displaced in a direction opposite to the direction of protrusion.

The protrusion, i.e., a first protrusion 111, on the first panel 110 protrudes in the thickness direction of the battery cell with respect to a panel body. Because generally, the swelling pressure of the battery cell is applied in the thickness direction of the battery cell, the first protrusion 111 is also set to protrude in the thickness direction of the battery cell. The first protrusions 111 may be provided on one or more first panels 110. For example, the first protrusion 111 may be provided in a size covering most of the sides of the battery cell 11. However, as described below, a plurality of first protrusions 111 may be provided to be spaced apart from each other in a longitudinal direction or width direction of the battery cell 11. A total number and area of the first protrusions 111 are not limited, provided that they are capable of effectively absorbing swelling pressure. In the present embodiment, an example in which one first protrusion 111 is provided is shown. That is, one first protrusion 111 may be formed to be wide such that a most part of the battery cell 11 may be covered with the area of the first protrusion 111. The battery cell 11 includes an electrode assembly in a battery cell case, and the electrode assembly occupies most of the area of the battery cell. Accordingly, the size of the first protrusion 111 may be set to correspond to the size of the electrode assembly. That is, the one first protrusion 111 may extend on the first panel 110 in the longitudinal and width directions of the first panel 110 to correspond to the size of the electrode assembly.

The panel body of the first panel 110 is coupled to a lower end of the first protrusion 111. That is, the first protrusion 111 extends from the panel body to be elastically displaced with respect to the first panel 111. The panel body includes a portion surrounding the first protrusion 111 to support the elastic displacement of the first protrusion 111.

Referring to FIG. 4, the first protrusion 111 includes a protruding surface 111a on a front end thereof, and a circumferential surface 111b, one end of which is connected to the protruding surface 111a and another end of which is connected to the first panel 110. The protruding surface 111a is a surface that is in contact with a side of the battery cell 11 when the panel assembly 100 is installed on the battery cell stack. An inner side of the first protrusion 111 may have a concave shape (hereinafter referred to as a concave portion 11 1c) corresponding to a protruding shape of the first protrusion 111 when viewed from a side of the first protrusion 111 opposite to the protruding surface 111a. A side of the concave portion 111c opposite to the direction of protrusion is open. In the panel assembly 100 of the present invention, the swelling pressure of the battery cell 11 is absorbed due to the elastic displacement of the first protrusion 111. As described above, the first protrusion 111 of the present embodiment is in the form of a protruding plate portion extending from the panel body. In addition, because the inner side of the first protrusion 111 is concave to correspond to the protruding shape of the first protrusion 111, a space is formed on a back side of the first protrusion 111. Accordingly, the first protrusion 111 may be easily elastically displaced through the space of the concave portion 111c. A thickness of these panels or the first protrusion 111 (the protruding plate portion) may be appropriately selected to facilitate elastic displacement. In consideration of the energy density of the battery module or the battery pack, the panel or the first protrusion 111 is preferably formed as thin as possible.

In addition, the battery cell 11 may be disposed at a side at which the concave portion 111c is formed, i.e., a surface of the first protrusion 111 opposite to the protruding surface 111a. In this case, the battery cell 11 that expands may be accommodated through the concave portion 111c, thereby absorbing the swelling pressure of the battery cell 11.

The second panel 120 is disposed to face the first panel 110 and includes a first through-hole 121 corresponding to the first protrusion 111. Because the first protrusion 111 of the first panel 110 is inserted into the first through-hole 121, the size and shape of the first through-hole 121 correspond to the size and shape of the first protrusion 111. However, the size and shape of the first through-hole 121 do not need to be completely identical to those of the first protrusion 111. Preferably, the first through-hole 121 may be formed to be slightly larger than the first protrusion 111 so that the first protrusion 111 may be freely elastically displaced through the first through-hole 121. That is, when the first protrusion 111 is inserted into the first through-hole 121, there may be a gap G between an outer circumferential surface of the first protrusion 111 and an inner circumferential surface of the first through-hole 121.

Meanwhile, the second panel 120 may be formed of the same material as or a different material from the first panel 110.

At least one first through-hole 121 may be provided in the second panel 120. In the present embodiment, one first protrusion 111 is provided and thus one first through-hole 121 is also provided in the second panel 120 to correspond to the size of the first protrusion 111.

When the first panel 110 and the second panel 120 are combined with each other, the first protrusion 111 is inserted into the first through-hole 121 to protrude through the first through-hole 122. That is, the first protrusion 111 is inserted into the first through-hole 121 such that the front end of the first protrusion 111 protrudes through the first through-hole 121. The present invention is characterized in that even when the first and second panels 110 and 120 are combined with each other, the first protrusion 111 may be freely elastically displaced. In this case, the first through-hole 121 provides a space for displacement of the first protrusion 111. When the battery cell 11 installed in the battery cell stack swells due to a gas therein, swelling pressure of the battery cell 11 is applied to the panel assembly 100 facing the battery cell 11. That is, an expanded side of the battery cell 100 presses the front end (protruding surface) of the first protrusion 111. In this case, the first protrusion 111 is elastically displaced in a direction opposite to the direction in which the first protrusion 111 protrudes (i.e., a direction opposite to the direction of protrusion). Because the concave portion 111c is formed on the inner side of the first protrusion 111, the protruding plate portion (front end) is elastically displaced in the direction opposite to the direction of protrusion. In this case, the first protrusion 111 may be easily deformed in the direction opposite to the direction of protrusion without being regulated by the first through-hole 121. To this end, the size of the first through-hole 121 may be set to be greater than that of the first protrusion 111as described above.

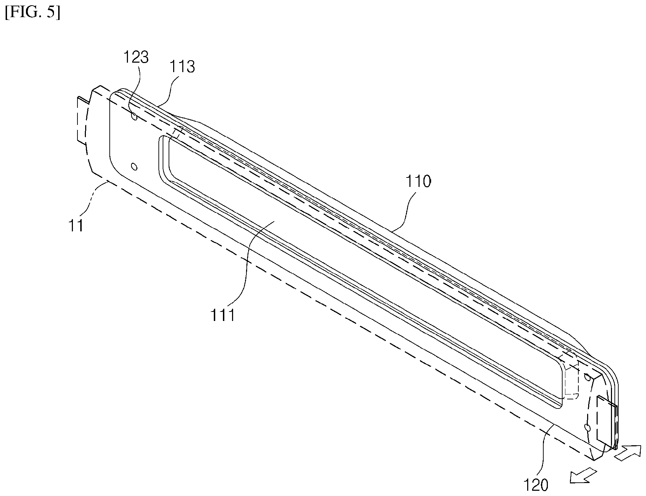

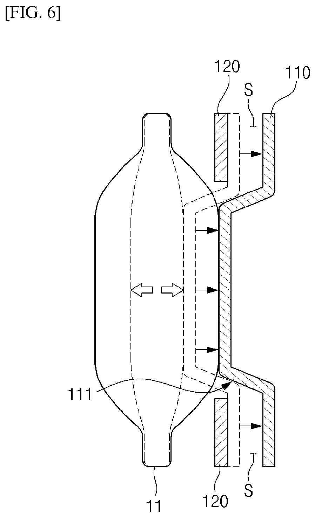

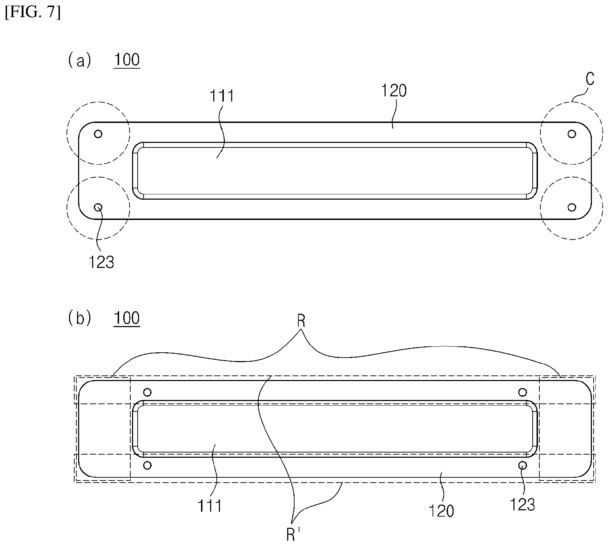

FIG. 5 is a schematic view illustrating a state in which the panel assembly 100 according to the first embodiment of the present invention is elastically displaced due to the swelling of battery cells. FIG. 6 is a cross-sectional side view of the panel assembly 100 according to the first embodiment of the present invention, in which the panel assembly 100 is elastically displaced due to the swelling of the battery cells. FIG. 7 is a schematic view illustrating the positions of coupling spots 113 and 123on the panel assembly 100 according to the first embodiment of the present invention.

Referring to FIGS. 5 to 7, the first panel 110 and the second panel 120 are inserted into the first through-hole 121 such that the front end of the first protrusion 111 passes and protrudes through the first through-hole 121. As described above, opposite sides of the first panel 110 and the second panel 120 are combined with each other in a state in which the first protrusion 111 is inserted into the first through-hole 121. That is, the first protrusion 111 is inserted into the first through-hole 121 but is not coupled to the first through-hole 121. Therefore, when the front end of the first protrusion 111 is pressed due to the swelling pressure of the battery cell 11 as shown in FIG. 5, the first protrusion 111 may be elastically displaced in the direction opposite to the direction of protrusion to absorb the swelling pressure.

The elastic displacement of the first protrusion 111 on the first panel 110 is not regulated although the first panel 110 and the second panel 120 are combined with each other.

Referring to FIGS. 3 and 7, in the present embodiment, the inner side of the first panel 110 is provided with a plurality of first coupling spots 113 that are spaced a predetermined distance from the first protrusion 111. The inner side of the first panel 110 should be understood as a side of the first panel 110 opposite to the second panel 120. Similarly, an inner side of the second panel 120 is provided with a plurality of second coupling spots 123 that are spaced a predetermined distance from the first through-hole 121. In this case, the first coupling spots 113 and the second coupling spots 123 may be located to correspond to each other. When the first and second coupling spots 113 and 123 are located close to the first protrusion 111 and the first through-hole 121, the elastic displacement of the first protrusion 111 may be limited. Accordingly, the first protrusion 111 and the first coupling spots 113 are preferably spaced a predetermined distance from each other. Similarly, the first through-hole 121 and the second coupling spots 123 are preferably spaced a predetermined distance from each other. The distance should be understood as the distance between an end of the first protrusion 111 to which the panel body is coupled and the coupling spot 113. When the distance is extremely small, a lower edge of the first protrusion 111 is regulated by coupling forces of the coupling spots (coupling portions) 113 and 123, thus preventing the first protrusion 111 to be freely elastically deformed. The distance may be, for example, in a range of 1 to 5 mm. However, the present invention is not limited thereto, and the distance may vary depending on the materials of the first and second panels 110 and 120, the size of the battery cell, and the like.

The plurality of first coupling spots 113 may be spaced apart from each other. The second coupling spots 123 may be also spaced apart from each other. As the coupling spots 113 and 123 are arranged in a disperse manner, a coupling force applied to the first and second panels 110 and 120 is also dispersed. Therefore, it is possible to prevent the first and second panels 110 and 120 from being combined with each other by an excessive coupling force. Accordingly, a coupling force applied to the first protrusion 111 decreases and thus a displacement motion thereof becomes freer.

Referring to FIG. 7A, parts indicated by a dotted line are outer sides C of corners of the first through-hole 121. The first coupling spots 113 may be located on an inner side of the first panel 110 at outer sides of corners of the first protrusion 111. Similarly, the second coupling spots 123 may be located on an inner side of the second panel 120 at the outer sides C of the corners of the first through-hole 121. FIG. 7A illustrates a shape of the panel assembly 100 in which the first panel 110 and the second panel 120 are combined with each other. For convenience of illustration, only the second coupling spots 123 on the second panel 120 and the outer sides C of the corners of the first through-hole 121 are illustrated in the drawings. However, referring to FIG. 3, it can be seen that the first coupling spots 113 and the second coupling spots 123 are arranged to correspond to each other.

Referring to FIG. 7B, parts indicated by a dotted line are edges of the first through-hole 121. In FIG. 7B, the first coupling spots 113 (the second coupling spots 123) may be disposed along both left and right edges R of the first protrusion 111 (both left and right edges of the first through-hole 121). That is, the first coupling spots 113 may be disposed on the inner side of the first panel 110 along the both edges of the first protrusion 111. Similarly, the second coupling spots 123 may be located on the inner side of the second panel 120 along the both sides R of the first through-hole 121.

Alternatively, in FIG. 7B, the first coupling spots 113 (the second coupling spots 123) may be disposed along both upper and lower edges R' of the first protrusion 111 (both left and right edges of the first through-hole 121).

When the coupling spots 113 and 123 are disposed along the first protrusion 111 (the outer sides C of the corners of or the both edges R and R' of the first through-hole 121) as shown in FIG. 7, the first panel 110 and the second panel 120 may be combined with each other in a balanced manner. Accordingly, the structural stability of the panel assembly 100 may be improved.

The first coupling spots 113 and the second coupling spots 123 may be welding points to be spot-welded. In the case of spot welding, a welding time is short and thus an area to be heated is limited to the vicinity of a part to be welded. Therefore, a degree of distortion of the first panel 110 and the second panel 120 due to the welding is small, thus minimizing damage to the first and second panels 110 and 120 when they are combined with each other. The area of the coupling spots may be minimized by spot welding and thus the first protrusion 111 may be prevented from being influenced by a bonding force between the first and second panels 110 and 120 even when the first and second panels 110 and 120 are combined with each other. Accordingly, a stable displacement motion of the first protrusion 111 is guaranteed. Spot welding is a known technology and thus a detailed description thereof is omitted here.

In addition, the structural rigidity of the panel assembly 100 of the present invention may be better than the compression pad 12 of the related art, because the two panels 110 and 120 are combined with each other. Therefore, a battery cell may be more firmly supported by the panel assembly 100 than by the compression pad 12 of the related art.

A process of operating a displacement mechanism of the present invention will be described in detail with reference to FIGS. 5 and 6 below. When a battery cell swells, the pressure thereof is applied to a front end, i.e., the protruding surface 111a, of the first protrusion 111. In the illustrated example, both ends of the first panel 110 and the second panel 120 in the longitudinal direction are fixed and thus only the first protrusion 111 is elastically displaced in the direction opposite to the direction of protrusion. That is, although opposite inner sides of the first panel 110 and the second panel 120 are combined with each other, the first protrusion 111 is not regulated by the first through-hole 121 but is elastically displaceable.

Meanwhile, in the illustrated example, there is a gap G between an outer circumferential surface, i.e., a circumferential surface 111b, of the first protrusion 111 inserted into the first through-hole 121, and the inner circumferential surface of the first through-hole 121. That is, the size of the first protrusion 111 may be slightly smaller than that of the first through-hole 121. Accordingly, when the protruding surface 111b of the first protrusion 111 is pressed, the first protrusion 111 may be easily elastically displaced through the first through-hole 121.

In FIG. 6, dotted lines denote the battery cell 11 and the first panel 110 in a state in which swelling does not occur. In this case, a side of the battery cell 11 and the protruding surface 111a of the first protrusion 111 are in contact with each other. In this state, when the battery cell 11 swells, the battery cell 11 expands in the thickness direction as shown by a solid line. In this case, the side of the battery cell presses the protruding surface 111a of the first protrusion 111. Accordingly, the first protrusion 111 is elastically displaced in the direction opposite to the direction of protrusion. In FIG. 6, it appears that the first panel 110 and the second panel 120 are completely separated from each other. However, FIG. 6 is provided for convenience of illustration, and actually, both ends of each of the first panel 110 and the second panel 120 are fixed as shown in FIG. 5.

In addition, the first protrusion 111 when elastically deformed tends to return to an original position thereof (a position indicated by a dotted line). That is, when the first protrusion 111 is elastically displaced, the first protrusion 111 presses the battery cell 11 in the direction of protrusion. Therefore, battery cells can be stably supported even when they swell.

Referring to FIG. 6, a space S is formed between the first panel 110 and the second panel 120 due to the elastic displacement of the first protrusion 111. The space S may be available as a cooling channel for air-cooling the battery cell 11 as well as the panel assembly 100. Therefore, the panel assembly 100 of the present invention is capable of cooling the battery cells to delay thermal propagation while effectively absorbing swelling of the battery cells.

### (Modified Example of First Embodiment)

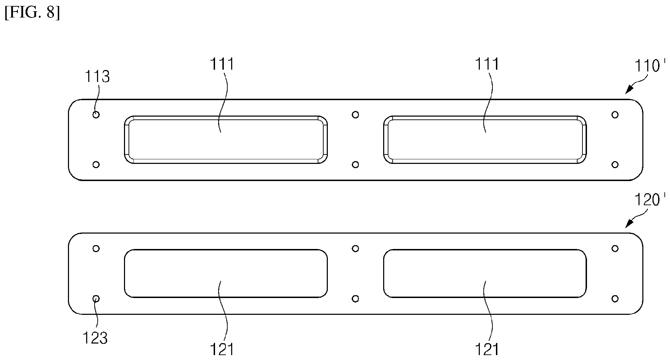

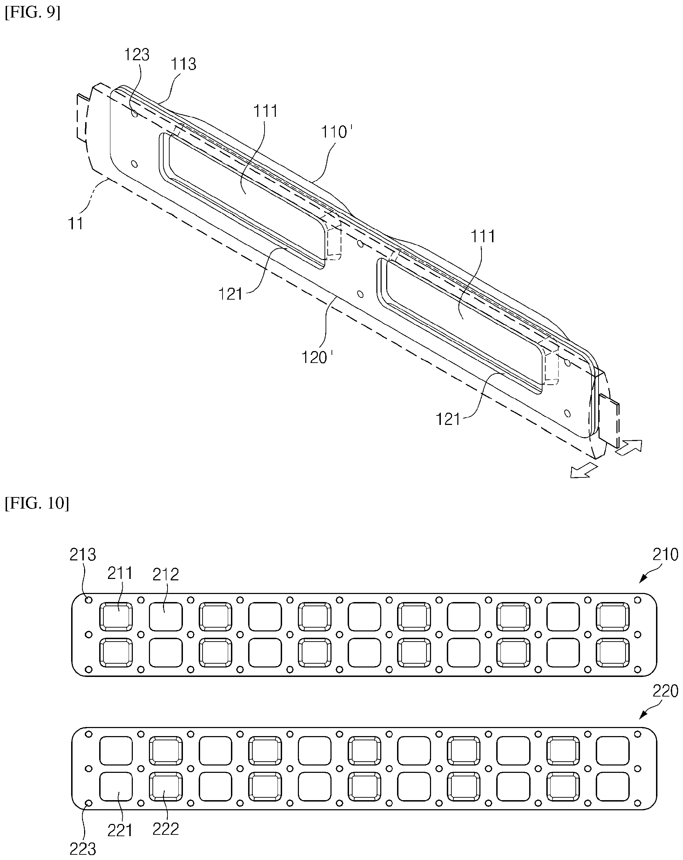

FIG. 8 is a schematic view of a first panel 110' and a second panel 120' according to a modified example of the first embodiment of the present invention. FIG. 9 is a schematic view illustrating a state in which a panel assembly according to the modified example of the first embodiment of the present invention is elastically displaced due to the swelling of battery cells.

Referring to FIGS. 8 and 9, a plurality of first protrusions 111 may be provided to be spaced a predetermined distance from each other in a longitudinal direction and/or a width direction of the first panel 110'. In addition, a plurality of first through-holes 121 may be provided to be spaced a predetermined distance from each other in a longitudinal direction and/or a width direction of the second panel 120' to correspond to the plurality of first protrusions 111. In the illustrated example, two first protrusions 111 and two first through-holes 121 are provided.

As shown in FIG. 9, the modified example is the same as the first embodiment in that the first protrusions 111 are elastically displaceable in a direction opposite to a direction of protrusion when battery cells swell. However, the modified example is different from the first embodiment in that two first protrusion 111 and two first through-holes 121 are provided in a longitudinal direction of the first panel 110' and the second panel 120'.

Referring to FIG. 9, an area of the second panel 120' occupied by the first through-holes 121 is smaller than that in the first embodiment. As described above, the strength of the second panel 120' improves because a pass-through area thereof decreases. As a result, the total strength of the panel assembly may improve. In addition, the first protrusion 111 is smaller in size than the first protrusion 111 of the first embodiment and thus may be elastically displaced even with a smaller swelling pressure.

Accordingly, battery cells may be more strongly supported according to the panel assembly of the present modified example.

In the present embodiment, an example in which two first protrusions 111 and two first through-holes 121 are provided has been described above but the number of first protrusions 111 and the number of first through-holes 121 may be increased. The number of first protrusions 111 and the number of first through-holes 121 may be appropriately determined according to the size of the battery cells, a swelling pressure, or a pressure distribution. In addition, the plurality of first protrusions 111 may be the same or different in size or shape. However, a size or shape of the first through-hole 121 corresponding to the first protrusion 111 should be identical to a size and shape of the corresponding first protrusion 111.

In addition, other components that are the same as those in the previous embodiments may also apply to the panel assembly of the present modified example and thus a detailed description thereof is omitted here.

### (Second Embodiment)

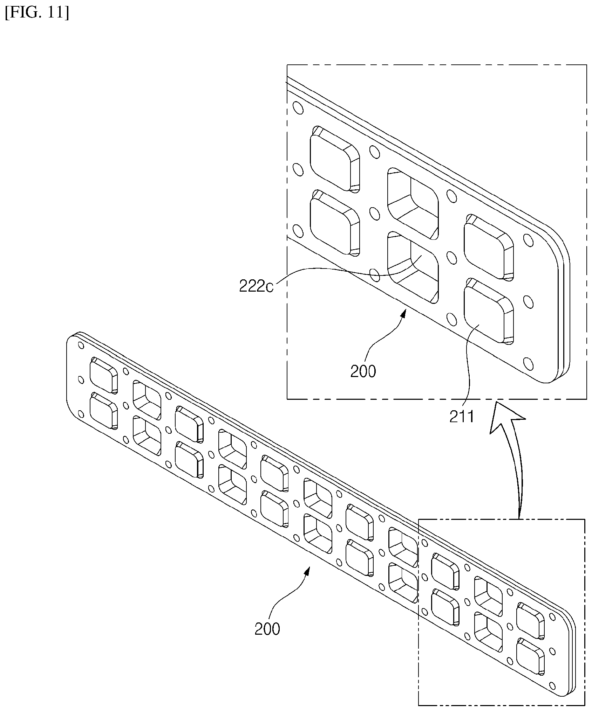

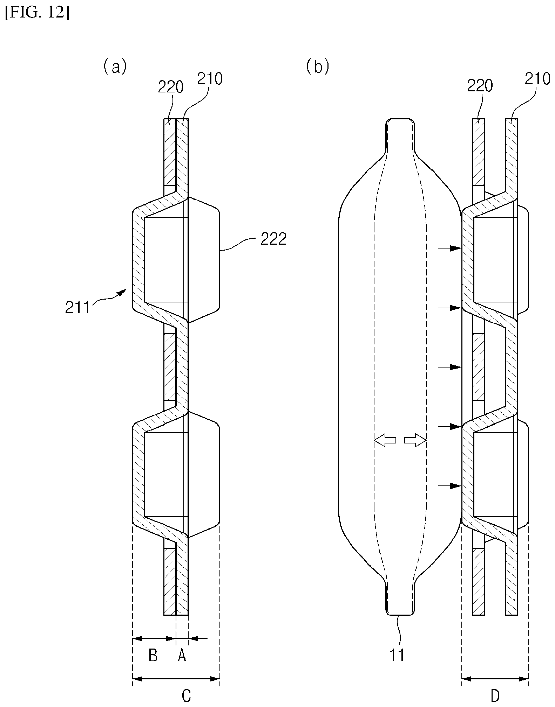

FIG. 10 is a schematic view of a first panel 210 and a second panel 220 according to a second embodiment of the present invention. FIG. 11 is an enlarged view of one end of a panel assembly 200 according to the second embodiment of the present invention. FIG. 12 is a cross-sectional side view of the panel assembly 200 of the second embodiment of the present invention, in which the panel assembly 200 is elastically displaced due to the swelling of battery cells.

Referring to FIGS. 10 and 11, at least one second through-hole 212 may be provided in the first panel 210 to be spaced apart from a first protrusion 211. In the present embodiment, an additional displacement mechanism is provided in addition to a displacement mechanism such as the first protrusions 211 and the first through-holes 221 described above. As the additional displacement mechanism, the first panel 210 is provided with the second through-hole 212, and the second panel 220 is provided with not only a first through-hole 221 but also a second protrusion 222 to be inserted into the second through-hole 212.

At least one second protrusion 222 and at least one second through-hole 212 may be provided. That is, one second protrusion 222 and one second through-hole 212 that are relatively large in size may be provided.

For example, the first panel 210 may be provided with at least one first protrusion 211 and at least one second through-hole 212. The second panel 220 may be provided with at least one second protrusion 222 and at least one first through-hole 221.

For example, a plurality of first protrusions 211 and a plurality of second through-holes 212 may be provided in a longitudinal direction and/or a width direction of the first panel 210.

In the illustrated example, a plurality of first protrusions 211 and a plurality of second through-holes 212 are provided in the longitudinal direction and the width direction of the first panel 210. A plurality of first protrusions 211 and a plurality of second through-holes 212 may be disposed in the longitudinal direction of the first panel 210. For example, in order to absorb the swelling pressure of a battery cell that is long in the longitudinal direction, the first protrusion 211 and the second through-hole 212 may be disposed in the longitudinal direction. Alternatively, a plurality of first protrusions 211 and a plurality of second through-holes 212 may be disposed in the longitudinal direction of the first panel 210.

It is not necessary to dispose a plurality of first protrusions 211 and a plurality of second through-holes 212 in an entire longitudinal direction or an entire width direction of the first panel 210. That is, the first protrusions 211 and the second through-holes 212 may be provided along a part of a length or width of the first panel 210. In this case, the swelling pressure of the battery cells 11 corresponding to the first protrusions 211 and the second through-holes 212 may decrease partially. When the swelling pressure of the part of the battery cell 11 decreases, a gas collected in the remaining part of the battery cell 11 may move to a case of the battery cell 11 in which the swelling pressure decreases. Therefore, the swelling pressure of the battery cell 11 can be absorbed even when the first protrusions 211 and the second through-holes 212 are provided along the part of the length or width of the first panel 210.

Similarly, one or more second protrusions 222 and one or more first through-holes 221 may be provided in a longitudinal direction or width direction of the second panel 220 or the longitudinal direction and the width direction of the second panel 220 to correspond to the second through-holes 212 and the first protrusions 211.

By arranging the protrusions 211 and 222 and the through-holes 212 and 221, swelling pressure can be absorbed more evenly in the longitudinal direction and the width directions of the battery cell 11. In addition, overall structural strength of the panel assembly 200 may improve due to a reduction of areas of the panels 210 and 220 that are occupied by the through-holes 212 and 221. Accordingly, according to the present embodiment, a battery cell can be firmly supported while effectively absorbing the swelling of the battery cell.

Meanwhile, the first protrusions 211 and the second through-holes 212 may be disposed in various patterns on the first panel 210. In the embodiment of FIGS. 10 and 11, the first protrusions 211 and the second through-holes 212 are regularly disposed in the longitudinal direction and the width direction of the first panel 210. Similarly, the first through-holes 221 and the second protrusions 222 were regularly disposed in the longitudinal direction and width direction of the second panel 220. However, the present invention is not limited thereto, and the first through-holes 221 and the second protrusions 222 may be regularly disposed only in the longitudinal direction or the width direction.

Similar to the first protrusions 211, lower ends of the second protrusions 222 are coupled to a panel body of the second panel 220 while being surrounded by the panel body. Accordingly, the second protrusions 222 may be elastically displaced while being supported by the panel body.

The first protrusions 211 are disposed on the first panel 210 to be spaced apart from the second through-holes 212.

Similarly, the second protrusions 222 are disposed on the second panel 220 to be spaced apart from the first through-holes 221.

In this case, the first panel 210 and the second panel 220 are combined with each other in a state in which the protrusions 211 and 222 thereof are inserted into the through-holes 221 and 212, respectively.

As described above, the plurality of protrusions 211 and 222 are respectively inserted into the through-holes 221 and 212 corresponding thereto and thus the first panel 210 and the second panel 220 may be combined with each other at a predetermined position. In addition, the first panel 210 and the second panel 220 surround the through-holes 221 and 212, respectively. Therefore, the structural strength of the panel assembly 200 may be more improved than in the first embodiment in which one through-hole is formed to be large. Therefore, it is possible to protect the battery cell 11 from external impact while absorbing the swelling pressure of the battery cell 11.

Referring to FIGS. 11 and 12, the first protrusion 211 and the second protrusion 222 are respectively inserted into the first through-hole 221 and the second through-hole 212 such that a front end of the first protrusion 211 and a front end of the second protrusion 222 protrude while passing through the first through-hole 221 and the second through-hole 212. While the protrusions 211 and 222 are respectively inserted into the through-holes 221 and 212 corresponding thereto as described above, the first protrusion 211 and the second protrusion 222 are elastically displaced in a direction opposite to the direction of protrusion to absorb the swelling pressure of the battery cell when the front end of the first protrusion 211 and the front end of the second protrusion 222 are pressed by the swelling pressure of the battery cell. That is, the second embodiment is the same as the first embodiment in that the movement of the protrusions 211 and 222 is not restricted by the through-holes 221 and 212 while the protrusions 211 and 222 are inserted into the corresponding through-holes 221 and 212.

Referring to FIGS. 11 and 12, the protrusions 211 and 222 are respectively provided on both surfaces of the panel assembly 200 facing a side of the battery cell. Therefore, the panel assembly 200 of the present embodiment is capable of more effectively absorbing swelling occurring in battery cells disposed at both sides of the panel assembly 200. In addition, the second embodiment is the same as the first embodiment in that concave portions 222c are formed on sides of the panel assembly 200 opposite to the protrusions 211 and 222. Therefore, when swelling occurs in both the battery cells on the both sides of the panel assembly 200, swelling can be more efficiently absorbed through the elastic displacement of the protrusions 211 and 222 and spaces of the concave portions 222c.

In addition, other components that are the same as those in the previous embodiments may also apply to the panel assembly 200 of the present embodiment and thus a detailed description thereof is omitted here.

### (Modified Example of Second Embodiment)

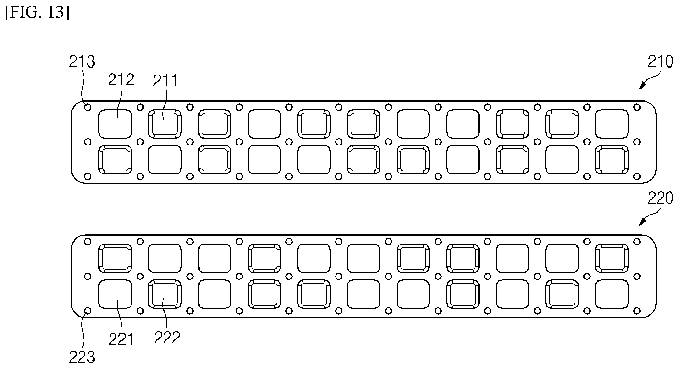

FIG. 13 is a schematic view of a first panel 210' and a second panel 220' according to a modified example of the second embodiment of the present invention.

In the present modified example, first protrusions 211 and second through-holes 212 are irregularly disposed in a longitudinal direction and a width direction of the first panel 210'. However, the present invention is not limited thereto, and the first protrusions 211 and the second through-holes 212 may be irregularly disposed in the longitudinal direction or the width direction of the first panel 210'. In this case, the present modified example is the same as the second embodiment in that in the second panel 220', the positions of the first through-holes 221 correspond to the positions of the first protrusions 211, and the position of the second protrusions 222 correspond to the positions of the second through-holes 212.

As described above, a panel assembly may be designed in various patterns by irregularly arranging the protrusions 211 and 222 and the through-holes 221 and 212. For example, the protrusions 211 and 222 may be concentrated in an area of a battery cell in which a large amount of gas is generated. Accordingly, according to the present modified example, it is possible to cope with a swelling phenomenon occurring in battery cells under various environments and conditions.

In addition, other components that are the same as those in the previous embodiments may also apply to the panel assembly of the present modified example and thus a detailed description thereof is omitted here.

### (Third Embodiment)

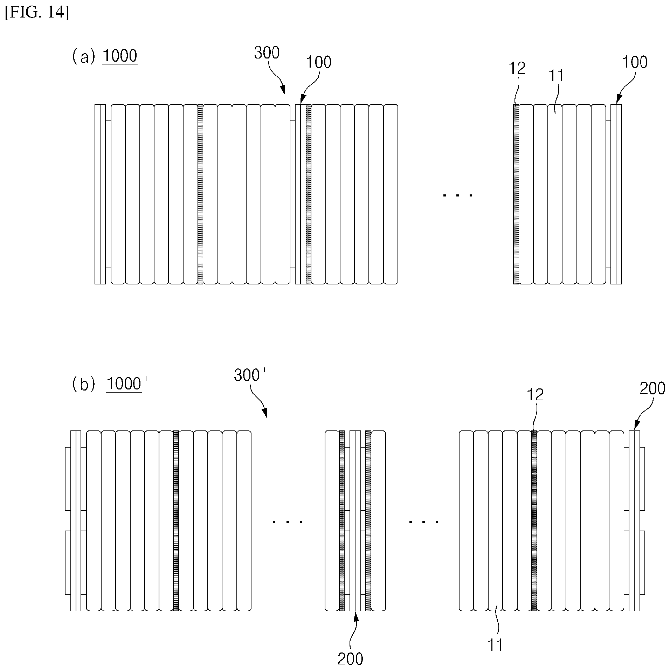

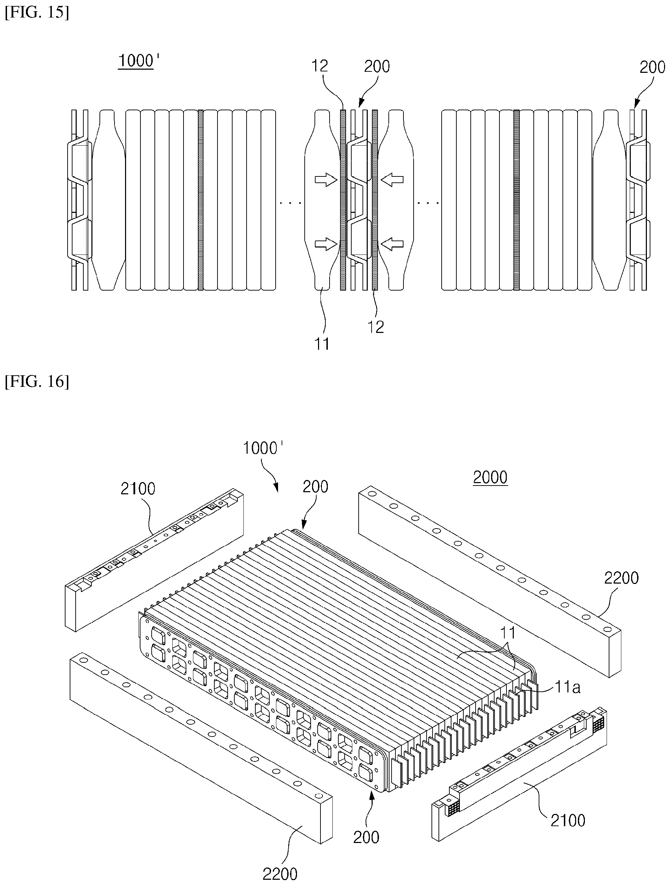

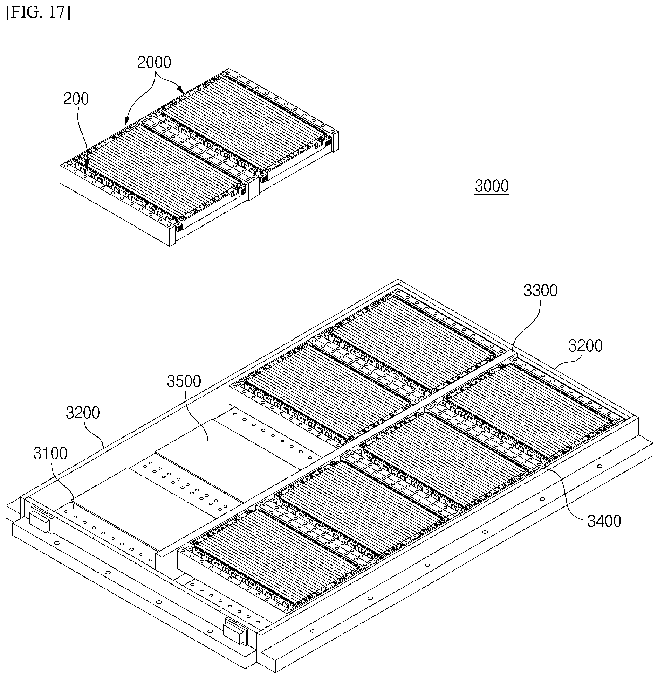

FIG. 14 is a front view of battery cell blocks 1000 and 1000' in which panel assemblies 100 and 200 are respectively installed on battery cell stacks 300 and 300' of the present invention. FIG. 15 is a schematic view illustrating a state in which the panel assembly 200 according to the second embodiment of the present invention absorbs the swelling of battery cells in a battery cell stack 300'. FIG. 16 is an exploded perspective view of a battery module 2000 including the battery cell block 1000' in which the panel assembly 200 according to the second embodiment of the present invention is installed. FIG. 17 is a schematic view of an example in which the battery module 2000 is installed in a battery pack 3000.

FIG. 14A illustrates a state in which the panel assembly according to the first embodiment or the modified example of the first embodiment is installed on the battery cell stack 300. FIG. 14B illustrates a state in which the panel assembly according to the first embodiment or the modified example of the second embodiment is installed on the battery cell stack 300'. As shown in the drawings, a plurality of battery cells 11 may be stacked to form a battery cell stack, and a panel assembly according to the present invention may be installed between the battery cells 11 and on both sides of the battery cell stack to form a battery cell block. The panel assembly may be installed at a position for absorbing the swelling pressure of the battery cells 11. Thus, the panel assembly may be installed at a position between a battery cell 11 and a battery cell 11 that are stacked on the battery cell stack. Alternatively, the panel assembly may be installed on one side or both sides of the battery cell stack 300 or 300'. In the present embodiment, panel assemblies are installed between battery cells of a battery cell stack and on both sides of the battery cell stack to stably absorb the swelling pressure of the battery cell stack.

When the panel assembly is disposed on sides of the battery cell block 1000 or 1000', the battery cell stack 300 or 300' may be protected by absorbing external impact. Alternatively, the panel assemblies 100 and 200 of the present invention and the compression pads 12 of the releated art may be installed together. In this case, the swelling of the battery cells may be more effectively absorbed.

Referring to FIG. 15, even when the battery cell stack swells, the swelling may be effectively absorbed by the panel assembly 200 of the present invention.

FIG. 16 illustrates a battery module including a battery cell block with a panel assembly of the present invention. That is, a battery module may be configured by accommodating the battery cell block in a module housing. Here, the module housing may be configured in the form of a tetragonal pillar surrounding four sides, i.e., upper, lower, left, and right sides of the battery cell stack, similar to a general battery module. Alternatively, as shown in an example of FIG., 16, the module housing may be configured in a so-called modular structure in which at least some of the upper, lower, left, and right sides of the battery cell stack are open.

In FIG. 16, upper and lower parts of a battery cell stack are open, and plates 2100 and 2200 are provided along sides of the battery cell stack. The battery module 2000 having the modular structure of FIG. 16 includes an end plate 2100 on a side of the battery cell stack from which leads 11a protrude, and side plates 2200 on both sides of the battery cell stack. In the case of the battery module 2000 having such a modular structure, the number of components of the module housing may be reduced to reduce total volume and weight of the battery module. In the illustrated example, the panel assembly 200 of the second embodiment is installed in the battery cell stack but the panel assembly 100 of the first embodiment may be installed. Alternatively, the panel assembly 100 of the first embodiment may be installed on both sides of the battery cell stack, and the panel assembly 200 of the second embodiment may be installed between the battery cells.

FIG. 17 illustrates a battery pack 3000 with the battery module 2000. The battery pack 3000 may include a base plate 3100 on which the battery module 2000 is installed, and a pack side wall plate 3200 surrounding edges of the base plate 3100. The battery pack 3000 may further include a center frame 3300 crossing the center of the base plate 3100. Battery modules are accommodated in two rows with respect to the center frame 3300. Partition members 340 disposed perpendicular to the center frame 3300 to partition a space for accommodation of the battery modules may be further provided. In the illustrated example, the battery module 2000 including a battery cell stack whose upper and lower sides are open is installed in the battery pack 3000. In this case, the side plates 2200 of the battery module 2000 may replace the partition members 3400 of the battery pack 3000. In this case, the total weight of the battery pack 3000 decreases and a space occupied by inner components thereof decreases, thus allowing more battery cells to be mounted. Therefore, the energy density of the battery pack 3000 may further improve. In addition, a thermally conductive resin layer 3500 may be provided between the base plate 3100 and the open lower side of the battery cell stack. The thermally conductive resin layer 3500 and the battery cell stack are in direct contact with each other to improve cooling efficiency.

### (Experimental Example)

A thickness and the like of each of the panels 110, 120, 210 and 220 should be appropriately selected so that the panel assemblies 100 and 200 may absorb the swelling of battery cells. When the thicknesses of these panels are extremely large, the deformation of the panels are limited, thus preventing protrusions from being elastically displaced.

Table 1 below shows a result of evaluating a degree to which the swelling of the battery cells is absorbed while changing thicknesses of the panels 210 and 220 and protruding lengths of the protrusions 211 and 222 of the second embodiment.

**]Table 1]**

| | Experimental example 1 | Experimental example 2 | Experimental example 3 | Experimental example 4 |
|---|---|---|---|---|
| panel thickness A (mm) of first and second panels | 1.5 | 1 | 0.75 | 0.5 |
| protruding length B (mm) of first and second protrusions | 2.5 | 2 | 2.5 | 1.5 |
| thickness C (mm) of panel assembly | 5.0 | 4.0 | 5.0 | 3.0 |
| thickness D when compressed to maximum degree | 4.0 | 3.0 | 3.25 | 2.0 |
| maximum compression rate | 20% | 25% | 35% | 33% |

In the present experimental example, the first panel 210 and the second panel 220 were set to have the same thickness, and the first protrusion 211 and the second protrusion 222 were set to have the same protruding length.

Referring to FIG. 12 and Table 1, the panel thickness A is the thickness of the panel body of the first panel 210 or the panel body of the second panel 220. The protruding length B is a protruding length of the first protruding 211 from the panel body of the first panel 210 or a protruding length of the second protrusion 222 from the panel body of the second panel 220.

The thickness C of the panel assembly 100 is the thickness of the panel assembly 200 before the swelling of the battery cells. That is, the thickness C is the thickness of the panel assembly 200 that is not pressed due to the swelling of the battery cells. In this case, the thickness C is a maximum thickness of the panel assembly 200 while the first protrusion 211 is inserted into the first through-hole 221 and the second protrusion 222 is inserted into the second through-hole 212.

The thickness D when compressed to a maximum degree is a minimum thickness of the panel assembly 200 measured at a point in time when the protrusions 211 and 222 on both sides of the panel assembly 200 are no longer elastically displaced when the protrusions 211 and 222 are pressed. Therefore, a degree to which the panel assembly 200 absorbs swelling may be evaluated as a ratio between the thickness C of the panel assembly 200 and the thickness D when compressed to the maximum degree. In other words, it may be evaluated that swelling absorption capability in an experimental example in which the maximum compression rate, which is the ratio between the thickness C of the panel assembly 200 and the thickness D when compressed to the maximum degree, was high is much better than those in the other experimental examples.

From Table 1 above, it can be seen that in all the experimental examples, the thickness of the panel assembly was reduced due to the elastic displacement of the protrusions in a direction opposite to the direction of protrusion. Therefore, a panel assembly according to the present invention is capable of effectively absorbing the swelling of battery cells, although the swelling absorbing capability may slightly vary according to a change of a thickness of panels.

In Table 1 above, a comparison of the panel thickness A and the maximum compression rate in each of the experimental examples with those in the other experimental examples reveals that maximum compression rates are high when the panel thickness A is less than 1 mm (Experimental examples 3 and 4) or is 1 mm or more (Experimental examples 1 and 2). That is, as the panel thickness A decreases, a swelling absorption rate increases.

Referring to Table 1, a thickness of a panel of the present invention may preferably be 1 mm or less. More preferably, a thickness of the panel may be equal to or less than 0.75 mm and greater than or equal to 0.5 mm. Most preferably, a thickness of the panel may be 0.75 mm.

The above description is only an example of the technical idea of the present invention and various modification and changes may be made by those of ordinary skill in the technical field to which the present invention pertains without departing from the essential features of the present invention. Therefore, the drawings of the present invention set forth herein are intended not to limit the technical idea of the present invention but to describe the technical idea, and the scope of the technical idea of the present invention is not limited by the drawings. The scope of protection for the present invention should be interpreted based on the following claims and all technical ideas within the same scope as the present invention should be interpreted as being included in the scope of the present invention.

In the present specification, terms representing directions such as upper, lower, left, right, forward and backward directions are used only for convenience of description and thus it will be obvious that these terms may be changed according to a position of an object or an observer.

### (Reference Numerals)

10: battery cell stack of related art
11: battery cell
12: compression pad
100, 100', 200, 200': panel assembly
110, 210: first panel
120, 220: second panel
111, 211: first protrusion
121, 221: first through-hole
212: second through-hole
222: second protrusion
1000, 1000': battery cell block
2000: battery module
3000: battery pack

## Claims

1. A panel assembly installed on a battery cell stack on which a plurality of battery cells are stacked to absorb swelling pressure of the plurality of battery cells, the panel assembly comprising:
a first panel including at least one first protrusion protruding in a thickness direction of the plurality of battery cells, and coupled to a lower end of the at least one first protrusion to surround the at least one first protrusion; and
a second panel including at least one first through-hole, the second panel being disposed to face the first panel,
wherein opposite inner sides of the first and second panels are combined with each other while the at least one first protrusion is inserted into the at least one first through-hole to cause a front end of the at least one first protrusion to protrude through the at least one first through-hole, and
wherein the at least one first protrusion is elastically displaced in a direction opposite to a direction of protrusion to absorb swelling pressure of the plurality of battery cells when the front end of the at least one first protrusion is pressed by the swelling pressure of the plurality of battery cells.

2. The panel assembly of claim 1, wherein a shape of the first panel and a shape of the second panel correspond to shapes of sides of the plurality of battery cells.

3. The panel assembly of claim 1, wherein the at least one first protrusion is provided on the first panel in a size corresponding to a size of an electrode assembly accommodated in each of the plurality of battery cells, and
wherein the at least one first through-hole is provided in the second panel to correspond to the at least one first protrusion.

4. The panel assembly of claim 1, wherein the at least one first protrusion is elastically displaceable without being regulated by the at least one first through-hole regardless of the combination of opposite inner sides of the first panel and the second panel.

5. The panel assembly of claim 4, wherein there is a gap between an outer circumferential surface of the at least one first protrusion inserted into the at least one first through-hole and an inner circumferential surface of the at least one first through-hole.

6. The panel assembly of claim 1, wherein an inner side of the at least one first protrusion includes a concave shape corresponding to a protruding shape of the at least one first protrusion when viewed from a side of the panel assembly with the direction opposite to the direction of protrusion.

7. The panel assembly of claim 1, wherein the inner side of the first panel is provided with a plurality of first coupling spots spaced a predetermined distance from the at least one first protrusion,
wherein the inner side of the second panel is provided with a plurality of second coupling spots provided to be spaced a predetermined distance from the at least one first through-hole and to correspond to positions of the plurality of first coupling spots, and
wherein the opposite inner sides of the first panel and the second panel are coupled with each other by coupling the first and second coupling spots corresponding to each other.

8. The panel assembly of claim 7, wherein the plurality of first coupling spots are provided on the inner side of the first panel along outer sides of corners of the at least one first protrusion or both edges of the at least one first protrusion, and
wherein the plurality of second coupling spots are provided on the inner side of the second panel along outer sides of corners of the at least one first through-hole or edges of the at least one first through-hole.

9. The panel assembly of claim 7, wherein the plurality of first coupling spots are disposed apart from each other, and
wherein the plurality of second coupling spots are disposed apart from each other.

10. The panel assembly of claim 7, wherein the plurality of first coupling spots and the plurality of second coupling spots are welding points configured to be spot-welded.

11. The panel assembly of claim 1, wherein a plurality of first protrusions are spaced a predetermined distance from each other in a longitudinal direction and/or a width direction of the first panel, and
wherein a plurality of first through-holes are spaced a predetermined distance from each other in a longitudinal direction and/or a width direction of the second panel to correspond to the plurality of first protrusions.

12. The panel assembly of claim 1, wherein the first panel further includes at least one second through-hole spaced apart from the at least one first protrusion,
wherein the second panel further includes at least one second protrusion which protrudes in the thickness direction of the plurality of battery cells, has a lower end coupled to the second panel to be surrounded by the second panel, and is spaced apart from the at least one first through-hole, and
wherein the at least one first protrusion and the at least one second protrusion are elastically displaced in the direction opposite to the direction of protrusion to absorb the swelling pressure of the plurality of battery cells, when the front end of the at least one first protrusion and a front end of the at least one second protrusion are pressed by the swelling pressure while the front end of the at least one first protrusion and the front end of the at least one second protrusion protrude through the at least one first through-hole and the at least one second through-hole, respectively.

13. The panel assembly of claim 12, wherein a plurality of first protrusions and a plurality of second through-holes are provided in a longitudinal direction or a width direction of the first panel, and
wherein a plurality of first through-holes and a plurality of second protrusions are provided in a longitudinal direction and/or a width direction of the second panel to respectively correspond to the plurality of first protrusions and the plurality of second through-holes.

14. The panel assembly of claim 13, wherein the plurality of first protrusions and the plurality of second through-holes are irregularly provided in the longitudinal direction and/or the width direction of the first panel, and
wherein the plurality of first through-holes and the plurality of second protrusions are irregularly provided in the longitudinal direction and/or the width direction of the second panel to respectively correspond to the plurality of first protrusions and the plurality of second through-holes.

15. The panel assembly of claim 13, wherein the plurality of first protrusions and the plurality of second through-holes are regularly provided in the longitudinal direction and/or the width direction of the first panel, and
wherein the plurality of first through-holes and the plurality of second protrusions are regularly provided in the longitudinal direction and/or the width direction of the second panel to respectively correspond to the plurality of first protrusions and the plurality of second through-holes.

16. The panel assembly of claim 1, wherein the first panel and the second panel comprise metal panels.

17. A battery cell block comprising:
a battery cell stack in which a plurality of battery cells are stacked; and
the panel assembly of any one of claims 1 to 16, wherein the panel assembly is installed between the plurality of battery cells and/or at least one side of the battery cell stack.

18. A battery module comprising the battery cell block of claim 17.

19. A battery pack comprising the battery module of claim 18.
